(19) Europäisches Patentamt

European Patent Office

Office européen des brevets

(11) **EP 1 501 299 B1**

(12) **EUROPEAN PATENT SPECIFICATION**

(45) Date of publication and mention
of the grant of the patent:
**13.12.2006 Bulletin 2006/50**

(51) Int Cl.:
***H04N 7/01*** (2006.01)

(21) Application number: **04102873.9**

(22) Date of filing: **22.06.2004**

(54) **An apparatus for detecting a telecine signal**

Verfahren und Vorrichtung zur Detektion eines Fernsehkinosignals

Procédé et dispositif servant à détecter une partie de vidéo convertie en télécinéma

(84) Designated Contracting States:
**DE FR GB IT NL**

(30) Priority: **21.07.2003 KR 2003049908**

(43) Date of publication of application:
**26.01.2005 Bulletin 2005/04**

(73) Proprietor: **SAMSUNG ELECTRONICS CO., LTD.
Suwon-si, Gyeonggi-Do 442-742 (KR)**

(72) Inventor: **Lee, Young-ho
Seoul (KR)**

(74) Representative: **Read, Matthew Charles et al
Venner Shipley LLP
20 Little Britain
London EC1A 7DH (GB)**

(56) References cited:
**WO-A-01/80559          US-A- 5 892 550
US-A- 5 982 444        US-B1- 6 469 745
US-B1- 6 509 933**

**Description**

The present invention relates to a method and corresponding apparatus for detecting a telecine portion of a television signal comprising generating an odd field difference signal and an even field difference signal corresponding to the magnitude of the difference between consecutive odd fields and even fields

Humans perceive a continuous image if 16 or more frames of pictures per second are viewed. That is, in an image in motion, 16 frames per second correspond to a minimum sampling frequency (i.e., Nyquist frequency) for sampling a signal to ensure information is preserved. In consideration of this, an image for a movie is processed at a speed of 24 frames per second, and an image for a television (TV) is processed at a speed of 25 to 30 frames per second.

The movie uses a progressive system that instantaneously stores every picture in a film and progressively projects the pictures on a screen. Compared to this progressive system of the movie, in TV, since an image is basically transmitted over the air, each frame is filmed and transmitted by scanning of several hundreds of scanning lines. The frame is then displayed on a screen of a Cathode Ray (Braun) tube by scanning. In the NTSC (National Television System Committee) colour TV system adopted in the United States, Japan, Korea, etc., 30 frames, each of which is composed of 525 scanning lines, per second are transmitted. In the PAL (Phase Alternation by Line) system or SECAM (Sequential Couleur a Memoire) system, 25 frames, each of which is composed of 625 scanning lines, per second are transmitted.

Also, the TV uses an interlaced scanning method which divides one picture (i.e., frame) into two fields and alternately scans the two fields in order to effectively present a moving image using limited scanning lines. At this time, the divided fields are called top and bottom fields, odd and even fields, upper and lower fields, etc. Accordingly, the NTSC system processes 60 fields of image per second, and the PAL or SECAM system processes 50 fields of image per second.

When a movie is televised through a TV, every frame of movie film is scanned and transmitted through a converter called a telecine (which is a compound word of a television and a cinema). At this time, if the films are reproduced at TV picture reproducing speed without ensuring that the number of film frames per second is equal to the number of television pictures per second, a viewer will watch the sequence of frames in a fast motion. This is because the NTSC system provides 30 frames of pictures per second as opposed to the 24 frames a second of a movie film. Accordingly, in order to transmit the movie films to the television of the NTSC system, 24 frames of film per second have to be translated into 60 television fields. This translation is achieved by obtaining 5 fields from 2 frames of film. A simple and practically used known method is to scan 3 fields for the first frame and scan 2 fields for the other. This is called "3:2 pull down method".

Basically, it is possible to reproduce an original image of 24 frames such as an original movie through a DVD (Digital Video Disk). However, since the majority of currently available display devices such as television use an interlaced scanning method, the DVD is actually manufactured to match with the interlaced scanning method. Accordingly, in order to restore the film created using the interlaced scanning method to the progressive system, the 3:2 pull-down method should be performed in a reverse manner. It is most important in such de-interlacing to accurately recognize the 3:2 pull-down sequence (Such a 3:2 pull-down state is called "film mode" because it is mainly applied in a movie).

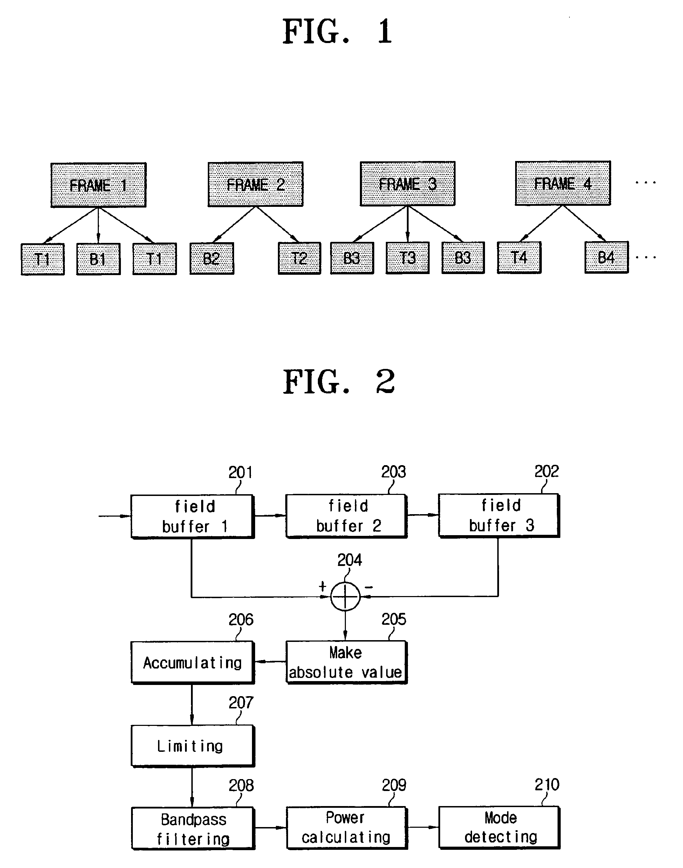

Figure 1 is a view showing the 3:2 pull down processing. Referring to Figure 1, two frames are scanned into 5 fields. One film frame is composed of a top field of odd-number lines and a bottom field of even-number lines. To ensure that 3 fields from one frame for television are used, any one of the top field and the bottom field has to be repeatedly used. In the drawing, a top field of a frame 1 is expressed by T1, a bottom field of the frame 1 by B1, a top field of a frame 2 by T2, and a bottom field of the frame 2 by B2.

Figure 2 is a block diagram showing a known film mode detection process. Referring to Figure 2, in the case where 10 fields are detected as the 3:2 pull down sequence and are referred to as F1, F2, F3, F4, F5, F6, F7, F8, F9, and F10, a film mode is detected by using the fact that a period of Summed Absolute Differences (SAD) is 5. That is, if the SAD is obtained by a period of two fields, the SADs of F1-F3, F6-F8 are small (if there is no noise, the SAD is approximately 0). The SADs are small because the repeated field is subtracted from the original field. By using this regularity (or periodicity), a film mode detector performs a subtract operation of pixel values between two fields having 1/30 second interval therebetween (204). The detector then obtains an absolute value of difference thereof (205), and creates intermediate data by adding up the absolute values of all the pixels (206). For example, if |F1-F3|=D1, |F2-F4| = D2, |F3-F4| =D3,..., SADs D1 and D6 have very small values and the remaining SADs have large values. The SADs have a periodicity of small, large, large, large, small.

In a case that there occurs an error in converting a picture, however, the SAD greatly increases. In consideration of this, limiting is performed using a threshold value M1 such that SADs larger than the threshold value M1 are substituted by the threshold value M1 (207). Through this limiting, the sequence of SAD D1, D2, D3, ... has a waveform having a period of 5 and an amplitude width movable within a limitation. When such a waveform is passed through a digital threshold bandpass filter (208) having a centre of $2\pi/5$ and DC gain of 0, if the waveform has a period of 5, a signal similar to a sine wave having a predetermined amplitude width is output. Otherwise, the output signal is approximately 0. When a calculation is performed with respect to the power of the signal similar to the sine wave (209), a power value is large if the signal has a period of 5. Otherwise, the power value is approximately 0. Accordingly, if the calculated power value is greater than a predetermined threshold value M2, it is determined that the signal is in a film mode. Otherwise, it is determined that the signal is not in a film mode (210).

The SAD between two fields of the 3:2 pull down stream having a 1/30 second interval therebetween has a period of 5, but the periodicity is affected when there is noise. Also, when the limiting block removes a peak which appears when a picture is converted, as the peak is removed by a predetermined value even in the case that the SAD has a small value according to the input stream, an incorrect value may be output. Also, the mode detection block has to have a predetermined threshold value, but in such a case, since the power is varied depending on the input stream, it is incorrect to set the threshold value to a fixed value.

Accordingly, even if the conventional film mode detection method properly sets a threshold through many experiments, it cannot accurately detect a film mode in the case where there is too much noise in the input stream and too much variation in the SAD. The present invention addresses this problem.

The present invention relates to a method of detecting a telecine portion of a television signal comprising generating an odd field difference signal and an even field difference signal corresponding to the magnitude of the difference between consecutive odd fields and even fields.

A method according to the present invention is characterised by generating an absolute difference signal indicative of the magnitude of the difference between the odd field difference signal and the even field difference signal and generating a telecine portion indication signal in dependence upon the absolute difference signal.

The present invention also relates to an apparatus for detecting a telecine portion of a television signal comprising means for generating an odd field difference signal and an even field difference signal corresponding to the magnitude of the difference between consecutive odd fields and even fields

US-B-5,892,550 describes an apparatus containing the pre-characterising features of claim 1. US-A-6,509,933 describes an alternative way of deciding whether a television signal is a telecine-converted signal.

An apparatus and method according to the present invention are defined in claims 1 and 3 appended hereto.

This is advantageous because any noise imposed on the input signal will not have such a detrimental effect to the determination of the telecine signal. This is because the determination is made on the basis of the difference between summed absolute differences. Therefore, the noise effect will be reduced.

Moreover, the present invention is advantageous because any scene changes (i.e. where the content of consecutive frames greatly changes), will not have such a detrimental effect on the determination of the telecine signal.

It will be appreciated that the phrase "absolute change amount" may also mean "absolute difference" and vice versa. Absolute in these terms means, on the whole, the magnitude of the difference.

An embodiment of the present invention will now be described, by way of example only, and with reference to Figures 3-11, in which:

Figure 1 is a diagram showing a 3:2 pull-down process;
Figure 2 is a block diagram showing a known film mode detection process;
Figure 3 is a block diagram showing an apparatus for detecting a film mode according to the present invention;
Figure 4 is a block diagram showing the first threshold value calculation unit of Figure 3;
Figure 5 is a block diagram showing the second threshold value calculation unit of Figure 3;
Figure 6 is a view explaining the relationship between the SAD pattern storage unit and the absolute change amount storage unit;
Figure 7 is a flowchart showing a method for detecting a film mode performed by the apparatus of Figure 3;
Figure 8 is a flowchart showing a film mode detection process performed by the main detection unit of Figure 7;
Figure 9 is a flowchart showing a film mode detection process performed by the sub-detection unit of Figure 7;
Figure 10 is a view showing the SADs and the absolute change amounts of Figure 7; and
Figure 11 is a view showing one example of the patterns of SADs and the patterns of the absolute change amounts.

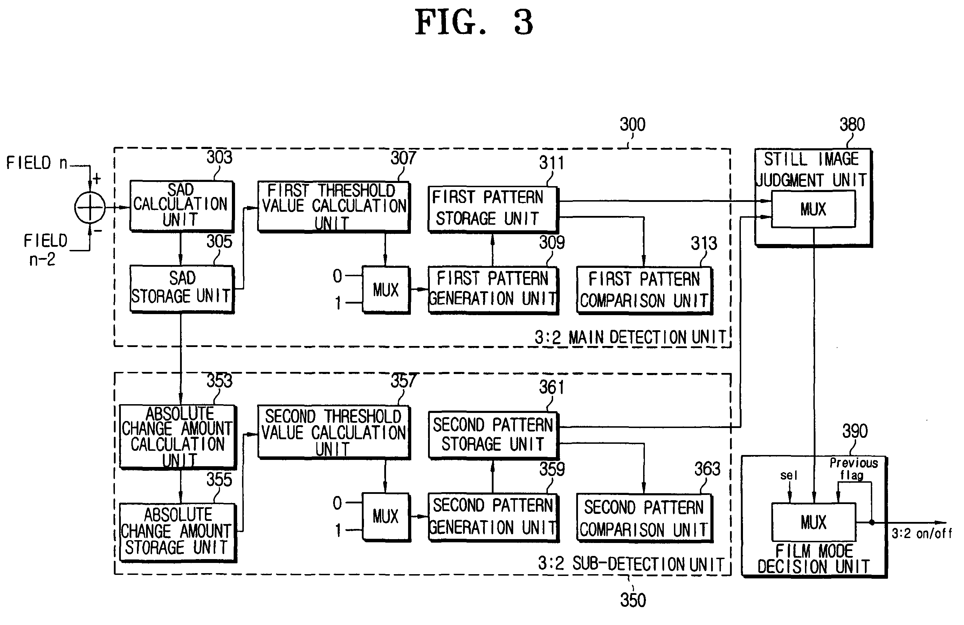

Referring to Figure 3, the apparatus for detecting a film mode includes a main detection unit 300, a sub-detection unit 350, a still image judgment unit 380, and a film mode decision unit 390.

The main detection unit 300 calculates a summed absolute difference (SAD) between fields spaced apart from each other by one period with respect to an input image signal, and detects a film mode based on the calculated SADs. The sub-detection unit 350 calculates an absolute change amount (or the absolute difference) between the calculated SADs, and detects the film mode based on the calculated absolute differences. The still image judgment unit 380 judges whether the input image signal is a still image, based on the calculated SADs and the absolute differences. The film mode decision unit 390 decides whether the input image signal is a film mode, by combining the results of detecting the film mode by the main detection unit 300 and the sub-detection unit 350 and the result of judging whether the image signal is a still image by using the still image judgment unit 380.

The main detection unit 300 includes a SAD calculation unit 303, a SAD storage unit 305, a first threshold value calculation unit 307, a first pattern generation unit 309, a first pattern storage unit 311, and a first pattern comparison unit 313.

The SAD calculation unit 303 calculates the SAD between the 1 period-spaced-fields of the image signal. The SAD storage unit 305 sequentially stores the SADs calculated by the SAD calculation unit 303. In order to sequentially store the calculated SADs, the SAD storage unit 305 is implemented using a predetermined number of FIFO (First-In First-Out) buffers. The first threshold value calculation unit 307 calculates a first threshold value using the stored SADs. The first pattern generation unit 309 generates patterns of the SADs according to the calculated first threshold value. The first pattern storage unit 311 sequentially stores the patterns of the SADs generated by the first pattern generation unit 309. In order to sequentially store the SAD patterns generated by the first pattern generation unit 309, the first pattern storage unit 311 is implemented by a predetermined number of FIFO buffers. The first pattern comparison unit 313 compares the pattern of the SAD stored in the first pattern storage unit 311 with a predetermined basic pattern of the SAD.

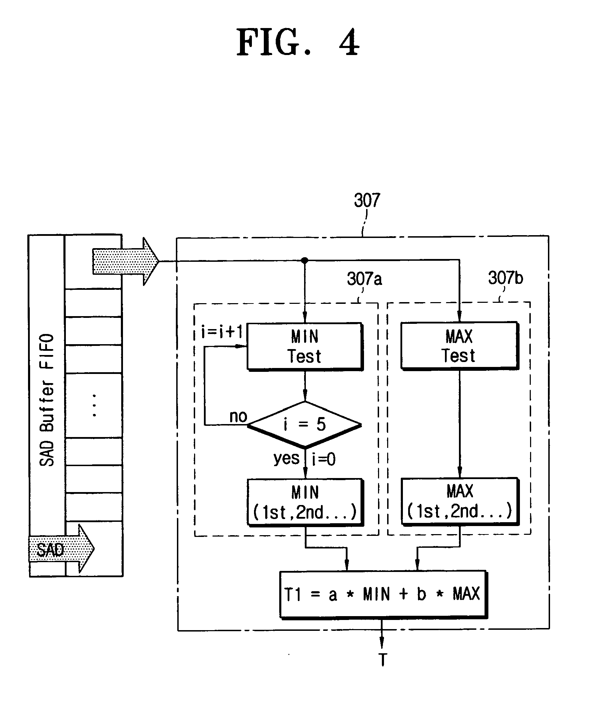

Also, the first threshold value calculation unit 307 includes a first minimum value detection unit 307a and a first maximum value detection unit 307b (see Figure 4). The first minimum value detection unit 307a detects a minimum value with respect to 5 consecutive SADs of the SADs stored in the SAD storage unit 305. The first maximum value detection unit 307b detects a maximum value with respect to the 5 consecutive SADs. In this case, since the film mode showing the 3:2 pull-down has a minimum value of the SADs once in five (5) periods, the first minimum value detection unit 307a detects a minimum value once in five (5) periods so that the burden to the operation is lessened.

Also, the sub-detection unit 350 includes an absolute difference calculation unit 353, an absolute difference storage unit 355, a second threshold value calculation unit 357, a second pattern generation unit 359, a second pattern storage unit 361, and a second pattern comparison unit 363. The absolute difference calculation unit 353 calculates the absolute difference between the SADs calculated by the SAD calculation unit 303. The absolute difference storage unit 355 sequentially stores the calculated absolute differences. The second threshold value calculation unit 357 calculates a second threshold value using the stored absolute differences. The second pattern generation unit 359 generates patterns of the absolute differences according to the calculated second threshold value. The second pattern storage unit 361 sequentially stores the patterns of the absolute differences generated by the second pattern generation unit 359. In this case, it is preferable that the absolute difference storage unit 355 and the second pattern storage unit 361 are implemented by FIFO buffers in the same manner as the SAD storage unit 305 and the first pattern storage unit 311.

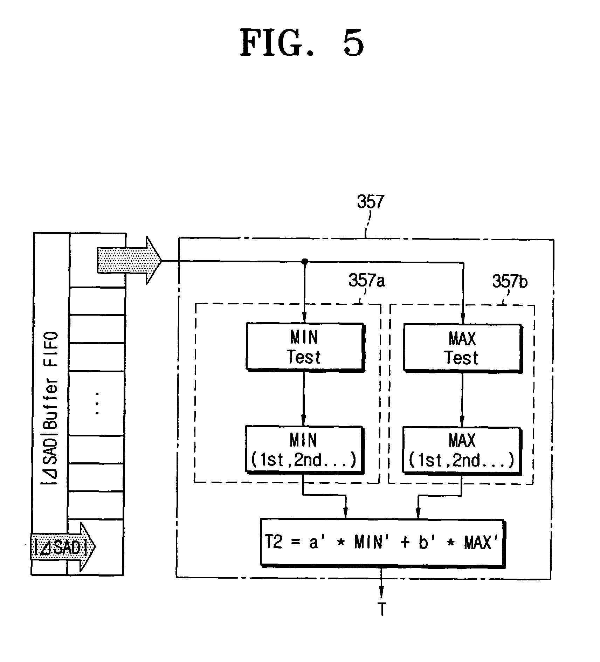

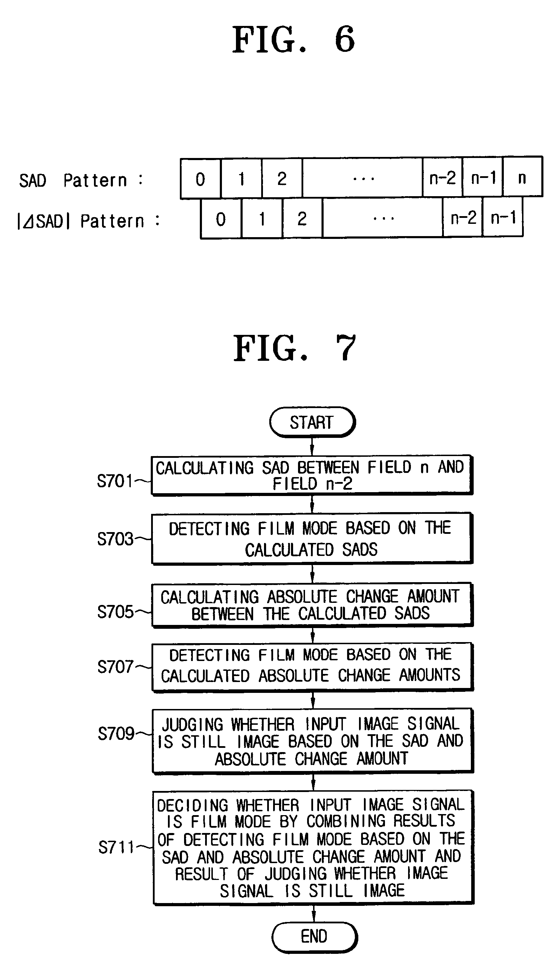

The second pattern comparison unit 363 compares the pattern of the absolute differences stored in the second pattern storage unit 361 with a predetermined basic pattern of the absolute difference. Also, the second threshold value calculation unit 357 includes a second minimum value detection unit 357a and a second maximum value detection unit 357b (see Figure 5). The second minimum value detection unit 357a detects a minimum value with respect to five consecutive absolute differences among the absolute differences stored in the absolute difference storage unit 355. The second maximum value detection unit 357b detects a maximum value with respect to the five consecutive differences. In an exemplary embodiment, the second pattern storage unit 361 is implemented so that the absolute differences between the SADs stored in the first pattern storage unit 311 are sequentially stored in the second pattern storage unit 361. The relation between the first pattern storage unit 311 and the second pattern storage unit 361 is illustrated in Figure 6.

Referring to Figure 7, the SAD calculation unit 303 of the main detection unit 300 calculates the SAD between 1 period-spaced-fields of an input image signal (S701). In other words, if it is assumed that a currently inputted field is called a 'present field' (n), a field before the present field n by one period is called a 'previous field' (n-1), and a field after the present field n by one period is called a 'next field' (n+1), the SAD calculation unit 303 calculates the SAD between the 1 period-spaced-fields by calculating the difference of pixel values between the previous field (n-1) and the next field (n+1).

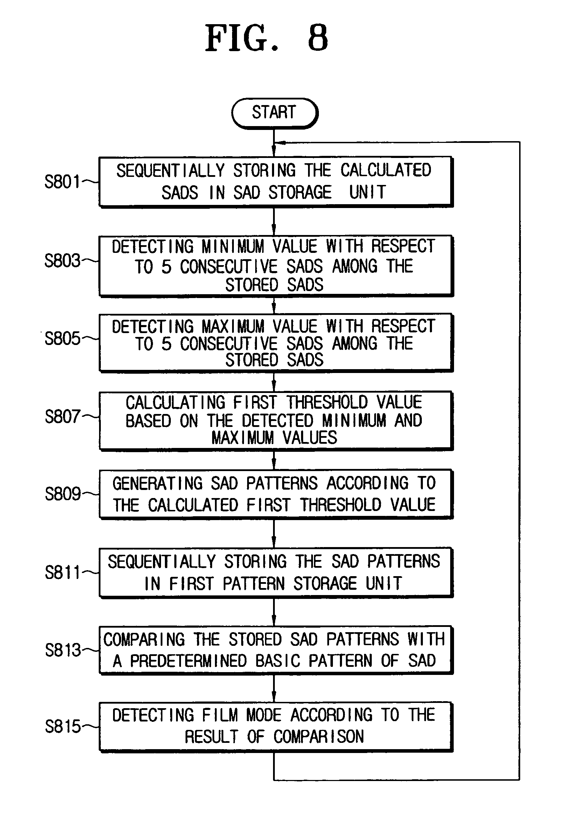

The main detection unit 300 detects whether the input image signal is a 3:2 pull-down image, i.e., whether it is in a film mode, based on the calculated SADs (S703). The process of detecting a film mode by the main detection unit 300 is illustrated in Figure 8.

Referring to Figure 8, the SAD storage unit 305 sequentially stores the SADs calculated by the SAD calculation unit 303 (S801). The first minimum value detection unit 307a of the first threshold value calculation unit 307 detects the minimum value with respect to the five consecutive SADs from amongst the SADs stored in the SAD storage unit 305 (S803). Since the same field is repeated by the same frame once in five periods in the 3:2 pull down image, the first minimum value detection unit 307a may be implemented so as to detect the minimum value once in five periods. The first maximum value detection unit 307b of the first threshold value calculation unit 307 detects the maximum value with respect to the five consecutive SADs of the SAD storage unit 305 (S805).

The first threshold value calculation unit 307 calculates the first threshold value based on the minimum value and the maximum value of the SADs detected by the first minimum value detection unit 307a and the first maximum value detection unit 307b, the first threshold value being calculated by the following equation.

## [Equation 1]

$$T1 = a \times \mathrm{MIN} + b \times \mathrm{MAX}$$

where, T1 denotes the first threshold value, a and b are certain values keeping a + b = 1, MIN denotes the minimum value with respect to the five consecutive SADs, and MAX denotes the maximum value with respect to the five consecutive SADs.

The first pattern generation unit 309 generates patterns of the SADs stored in the SAD storage unit 305 according to the first threshold value calculated by the first threshold value calculation unit 307 (S809). In this case, the first pattern generation unit 309 compares the SAD with the first threshold value calculated by the first threshold value calculation unit 307, and generates '1' if the SAD is larger than the first threshold value. Otherwise, the first pattern generation unit 309 generates '0'.

The first pattern storage unit 311 sequentially stores the patterns of the SADs generated by the first pattern generation unit 309 (S811). The first pattern comparison unit 313 compares the pattern of the SAD stored in the first pattern storage unit 311 with the predetermined basic pattern of the SAD (S813). Here, the basic pattern of the SAD refers to the basic pattern of the SAD of the 3:2 pull-down image, and appears with five types. That is, the five types of the basic pattern of the SAD are 0111101111, 1011110111, 1101111011, 1110111101, and 1111011110. The main detection unit 300 detects the film mode according to a result of comparison by the first pattern comparison unit 313 (S815). This process of detecting the film mode is repeatedly performed with respect to the input image signal. In the case that the picture is abruptly changed, the film mode detection process can properly cope with the changed picture.

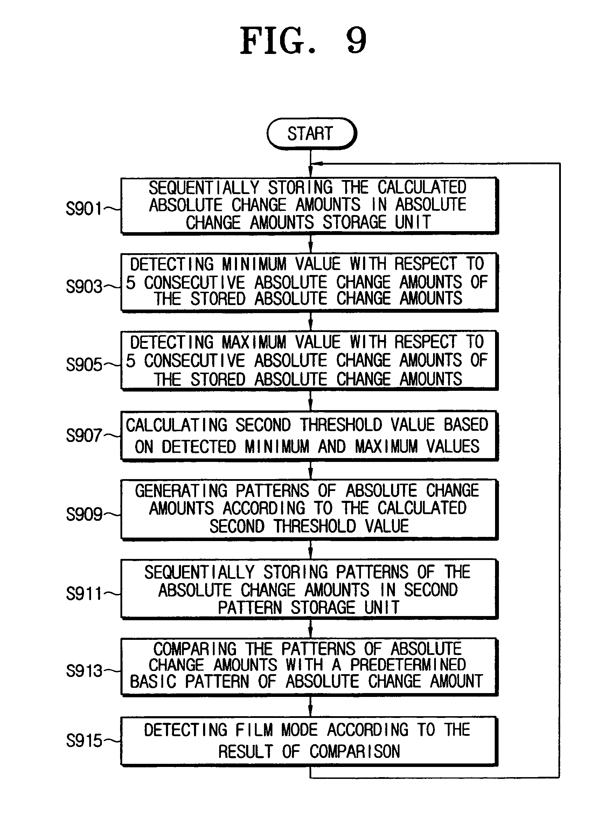

The absolute change amount calculation unit 353 of the sub-detection unit 350 calculates the absolute change amount between the SADs calculated by the SAD calculation unit 303 (S705). In other words, if it is assumed that the difference of pixel values between the 'previous field' (n-1) and the next (n+1) is SAD1, and the difference of pixel values between the present field (n) and the next field (n+1) is SAD2, the absolute change amount calculation unit 353 calculates a difference between the absolute values of SAD1 and SAD2, i.e., the absolute difference. The sub-detection unit 350 detects whether the input image signal is a 3:2 pull-down image based on the absolute differences calculated by the absolute difference calculation unit 353 (S707). The process of detecting a film mode performed by the sub-detection unit 350 is illustrated in Figure 9.

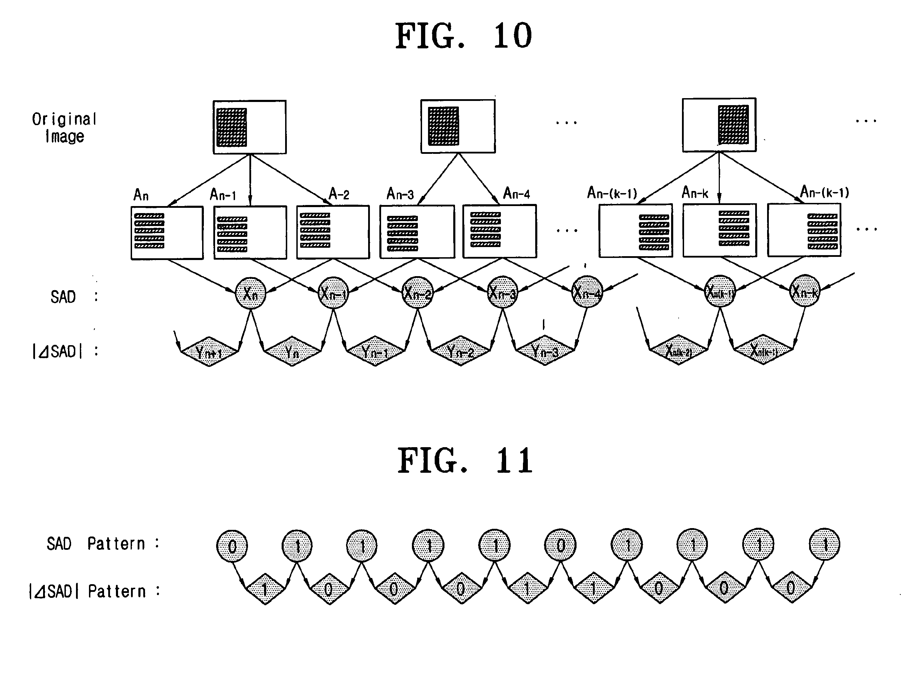

Referring to Figure 9, the absolute difference storage unit 355 sequentially stores the absolute differences calculated by the absolute difference calculation unit 353 (S901). The SAD and absolute difference in this case are illustrated in Figure 10. The second minimum value detection unit 357a of the second threshold value calculation unit 357 detects the minimum value with respect to five consecutive absolute differences of the absolute differences stored in the absolute difference storage unit 355 (S903). The second maximum value detection unit 357b of the second threshold value calculation unit 357 detects the maximum value with respect to the five consecutive absolute differences of the absolute differences stored in the absolute difference storage unit 355 (S905).

The second threshold value calculation unit 357 calculates the second threshold value based on the minimum value and the maximum value of the absolute differences detected by the second minimum value detection unit 357a and the second maximum value detection unit 357b, the second threshold value being calculated by the following equation.

## [Equation 2]

$$T2 = a' \times \mathrm{MIN'} + b' \times \mathrm{MAX'}$$

where, T2 denotes the second threshold value, a' and b' are certain values keeping a' + b' = 1, MIN' denotes the minimum value of the five consecutive absolute differences, and MAX' denotes the maximum value of the five consecutive absolute differences.

The second pattern generation unit 359 generates patterns of the absolute differences stored in the absolute difference storage unit 355 according to the second threshold value calculated by the second threshold value calculation unit 357 (S909). In this case, the second pattern generation unit 359 compares the absolute difference with the second threshold value calculated by the second threshold value calculation unit 357, and generates '1' if the absolute difference is larger than the second threshold value. Otherwise, the second pattern generation unit 359 generates '0'.

The second pattern storage unit 361 sequentially stores the patterns of the absolute difference generated by the second pattern generation unit 359 (S911). The second pattern comparison unit 363 compares the pattern of the absolute difference stored in the second pattern storage unit 361 with the predetermined basic pattern of the absolute difference (S913). Here, the basic pattern of the absolute difference means the basic pattern of the absolute difference of the 3:2 pull-down image, and appears with five types. In other words, the five types of the basic pattern of the absolute difference are 1000110001, 1100011000, 0110001100, 0011000110, and 0001100011. The basic pattern of the absolute difference is illustrated in Figure 11. The sub-detection unit 350 detects a film mode in accordance with a result of the comparison by the second pattern comparison unit 363 (S915).

The still image judgment unit 380 judges whether the input image signal is a still image based on the SAD and the absolute difference (S709). For example, if the presently calculated SAD and the SAD calculated one field before are very small in comparison to the previous SAD, and if the absolute difference between the presently calculated SAD and the SAD calculated one field before is very small in comparison to the previous absolute difference, the present input image is close to a still image. In this case, the pattern of the SAD and the pattern of the absolute difference stored in the first pattern storage unit 311 and the second pattern storage unit 361 are as follows.

SAD_pattern[n-1] = 0

SAD_pattern[n] = 0

$| \Delta SAD |$_pattern[n-1] =0

The film mode decision unit 390 decides whether the input image signal is the film mode by combining results of detecting the film mode by the main detection unit 300 and by the sub-detection unit 350 and a result of judging whether the image signal is the still image by the still image judgment unit 380. At this time, if it is judged that the input image signal is the still image by the still image judgment unit 380, the present patterns of the SAD and the absolute differences deviate from the 3:2 pull-down image, but the previous 3:2 pull-down image flag is maintained as it is. Several examples of deciding film mode by the film mode decision unit 390 are shown in Table 1 below.

[Table 1]

| Decision | Previous Flag | Still Flag | Main | Sub | Count |
|---|---|---|---|---|---|
| 0 | 0 | X | 1 | 1 | count < $\varepsilon$ |
| 1 | 0 | X | 1 | 1 | count = $\varepsilon$ |
| 1 | 1 | 0 | 1 | 1 | X |
| 0 | 1 | 0 | 0 | X | X |
| 1 | 1 | 0 | 1 | 0 | X |
| 1 | 1 | 1 | X | X | X |

The film mode decision unit 390 outputs the 3:2 pull-down image according to the results of detection by the main detection unit 300 and the sub-detection unit 350 and the previous flag. For example, if the previous flag is "0", and the counted value of the input image signal is smaller than a predetermined value, i.e., if the film mode detected by the main detection unit 300 and the sub-detection unit 350 does not continue for a predetermined time, the film mode decision unit 390 maintains the previous flag irrespective of the still flag, and outputs "0". If the main detection unit 300 and the sub-detection unit 350 detect the film mode in a state that the previous flag is "0" and the counted value of the input image signal reaches the predetermined value, the film mode decision unit 390 reverses the previous flag irrespective of the still flag, and outputs "1". Here, the fact that the previous flag is "0" means that the 3:2 pull-down image is not decided with respect to the previous image signal.

If the previous flag is "1", i.e., if the 3:2 pull-down image is decided with respect to the previous image signal, the film mode decision unit 390 decides the film mode irrespective of the counted value. In other words, in the case of the previous flag being "1", if the film mode is detected by the main detection unit 300 and the sub-detection unit 350 and the input image is not decided to be the still image by the still image judgment unit 380, the film mode decision unit 390 decides that the input image is the 3:2 pull-down image. Also, if the still flag is "0", i.e., if the input image is judged not to be the still image by the still image judgment unit 380, in the case that the film mode is detected by the main detection unit 300 but the film mode is not detected by the sub-detection unit 350, the film mode decision unit 390 decides that the input image is the 3:2 pull-down image.

However, if the still flag is "1" in the case that the previous flag is "1", the film mode decision unit 390 maintains the previous flag irrespective of the detection of the film mode by the main detection unit 300 and the sub-detection unit 350, and decides that the input image signal is the 3:2 pull-down image. This is to prevent the displayed image from being unnatural due to the frequent on/off operation of the 3:2 pull-down image flag. If the still image in non-film mode is inputted after the film mode image signal is inputted, there will not be a detrimental effect to the displayed image even though the film mode image process is performed with respect to the still image.

Consequently, the apparatus for detecting a film mode according to the present invention can accurately detect the film mode using the SAD and the absolute difference. Also, the apparatus can prevent the displayed image from being unnatural by reducing the frequency of on/off operations of the 3:2 pull-down image flag.

As described above, since the apparatus for detecting a film according to the present invention judges the film mode by calculating a proper threshold value according to the changes of the SAD and the absolute differences of the input image signal, it can decide the film mode accurately even in the case of having much noise and motion in the input image signal.

Also, the unnatural display image due to the frequent on/off operations of the 3:2 pull-down image flag can be prevented.

**Claims**

1. A method of detecting a telecine portion of a television signal comprising:

   generating an odd field difference signal and an even field difference signal corresponding to the magnitude of the difference between consecutive odd fields and even fields;
   generating an absolute difference signal indicative of the magnitude of the difference between the odd field difference signal and the even field difference signal;
   generating a telecine portion indication signal in dependence upon the absolute difference signal, **characterised by**
   judging whether the television signal is a still image based on the calculated odd and even field difference signals and the absolute difference signal;
   combining the odd and even field difference signals, the absolute difference signal and the result of judging whether the television signal is a still image, and detecting a film made of the television signal as a result thereof.

2. A method according to claim 1, comprising:

   storing the absolute difference signal;
   calculating a threshold value in accordance with the stored absolute difference signal; and
   generating the telecine portion indication signal in dependence upon the threshold value.

3. An apparatus for detecting a telecine portion of a television signal comprising:

   means (300) for generating an odd field difference signal and an even field difference signal corresponding to the magnitude of the difference between consecutive odd fields and even fields;
   means (350) for generating an absolute difference signal indicative of the magnitude of the difference between the odd field difference signal and the even field difference signal;
   means (390) for generating a telecine portion indication signal in dependence upon the absolute difference signal, **characterised by.**
   a still image judgment unit (380) for judging whether the television signal is a still image based on the calculated odd and even field difference signals and the absolute difference signal; wherein
   the means (390) for generating a telecine portion indicate signal is operable to combine the results from the means (300) for generating odd and even field difference signals, means (350) for generating the absolute difference signal and a result of judging whether the television signal is a still image using the still image judgment unit (380).

4. An apparatus according to claim 3, comprising:

   means (355) for storing the absolute difference signal;
   means (357) for calculating a threshold value in accordance with the stored absolute difference signal; and

means (390) for generating the telecine portion indication signal in dependence upon the threshold value.

5. A television apparatus, comprising:

means for displaying a picture; and
apparatus according to either one of claims 3 or 4.

6. The apparatus as claimed in claim 3, wherein the means (300) for generating the odd and even field difference signals comprises:

a SAD calculation unit (303) for calculating the odd and even field difference signals between the 1 period-spaced-fields of the television signal;
a SAD storage unit (305) for sequentially storing the calculated odd and even field difference signals;
a first threshold value calculation unit (307) for calculating a first threshold value using the stored odd and even field difference signals;
a first pattern generation unit (309) for generating patterns of the odd and even field difference signals according to the calculated first threshold value;
a first pattern storage unit (311) for sequentially storing the patterns of the odd and even difference signals generated by the first pattern generation unit (309); and
a first pattern comparison unit (313) for comparing the patterns of the odd and even difference signals stored in the first pattern storage unit (311) with a predetermined basic pattern of the odd and even difference signals;

wherein the means (300) for generating the odd and even field difference signals generate the telecine portion indication signal according to a result of comparison by the first pattern comparison unit (313).

7. The apparatus as claimed in claim 6, wherein the first threshold value calculation unit (307) comprises:

a first minimum value detection unit (307a) for detecting a minimum value with respect to five consecutive odd and even field difference signals of the odd and even field difference signals stored in the SAD storage unit (305); and
a first maximum value detection unit (307b) for detecting a maximum value with respect to the five consecutive odd and even field difference signals;

wherein the first threshold value calculation unit (307) calculates the first threshold value based on the detected minimum and maximum values.

8. The apparatus as claimed in claim 7, wherein the first threshold value calculation unit (307) calculates the first threshold value by the following equation,

$$T1 = a \times MIN + b \times MAX$$

wherein T1 denotes the first threshold value, a and b are certain values keeping a + b = 1, MIN denotes the minimum value of 5 consecutive odd and even field difference signals, and MAX denotes the maximum value of the 5 consecutive odd and even field difference signals.

9. The apparatus as claimed in claim 8, wherein the means (350) for generating an absolute difference signal comprises:

an absolute difference calculation unit (353) for calculating the absolute difference signals between the calculated odd and even field difference signals;
an absolute difference storage unit (355) for sequentially storing the absolute difference signals;
a second threshold value calculation unit (357) for calculating a second threshold value using the stored absolute difference signals;
a second pattern generation unit (359) for generating patterns of the absolute differences according to the calculated second threshold value;
a second pattern storage unit (361) for sequentially storing the patterns of the absolute difference signals generated by the second pattern generation unit (359); and

a second pattern comparison unit (363) for comparing the pattern of the absolute difference signals stored in the second pattern storage unit (361) with a predetermined basic pattern of the absolute differences;

wherein the means for generating an absolute difference signal (350) detects the telecine portion according to a result of comparison by the second pattern comparison unit (363).

10. The apparatus as claimed in claim 9, wherein the second threshold value calculation unit (357) comprises:

a second minimum value detection unit (357a) for detecting a minimum value with respect to five consecutive absolute difference signals among the absolute difference signals stored in the absolute difference storage unit (355); and
a second maximum value detection unit (357b) for detecting a maximum value with respect to the five consecutive absolute difference signals;

wherein the second threshold value calculation unit (357) calculates the second threshold value based on the detected minimum and maximum values.

11. The apparatus as claimed in claim 10, wherein the second threshold value calculation unit (357) calculates the second threshold value using the following equation,

$$T2 = a' \times MIN' + b' \times MAX'$$

wherein T2 denotes the second threshold value, a' and b' are certain values keeping a' + b' = 1, MIN' denotes the minimum value of 5 consecutive absolute difference signals, and MAX' denotes the maximum value of the 5 consecutive absolute difference signals.

12. The apparatus as claimed in claim 10, wherein the still image judgment unit (388) judges whether the television signal is a still image according to the patterns of the odd and even field difference signals stored in the first pattern storage unit (311) and the patterns of the absolute difference signals stored in the second pattern storage unit (361).

13. The method as claimed in claim 1, wherein the step of generating odd and even field difference signals comprises:

sequentially storing the calculated odd and even field difference signals in a SAD storage unit (305);
calculating a first threshold value using the sequentially stored odd and even field difference signals;
generating patterns of the odd and even field difference signals according to the calculated first threshold value;
sequentially storing the generated patterns of the odd and even field difference signals in a first pattern storage unit (311); and
comparing the stored patterns of the odd and even field difference signals with a predetermined basic pattern of the odd and even field difference signals;

wherein the telecine portion indication signal is generated according to a result of comparison by the odd and even field difference signals pattern comparison step.

14. The method as claimed in claim 13, wherein the first threshold value calculation step comprises:

detecting a first minimum value with respect to 5 consecutive odd and even field difference signals of the odd and even field difference signals stored in the SAD storage unit (305); and
detecting a first maximum value of the 5 consecutive odd and even field difference signals;

wherein the first threshold value calculation step calculates the first threshold value based on the detected first minimum value and the first maximum value.

15. The method as claimed in claim 14, wherein the first threshold value calculation step calculates the first threshold value by the following equation,

$$T1 = a \times MIN + b \times MAX$$

wherein T1 denotes the first threshold value, a and b are certain values keeping a + b = 1, MIN denotes the minimum value of 5 consecutive odd and even field difference signals, and MAX denotes the maximum value of the 5 consecutive odd and even field difference signals.

16. The method as claimed in claim 15, wherein the step of generating an absolute difference signal comprises:

sequentially storing the absolute difference signal in an absolute difference storage unit (355);
calculating a second threshold value using the stored absolute difference signals;
generating patterns of the absolute difference signals according to the calculated second threshold value;
sequentially storing the patterns of the absolute difference signals generated by a second pattern generation unit (359); and
comparing the patterns of the absolute difference signals stored in a second pattern storage unit (361) with a predetermined basic pattern of the absolute differences;

wherein the telecine portion indication signal is generated according to a result of comparison in the absolute difference signal comparison step.

17. The method as claimed in claim 16, wherein the second threshold value calculation step comprises:

a second minimum value detection step of detecting a minimum value with respect to 5 consecutive absolute difference signals among the absolute difference signals stored in the absolute difference storage unit (355); and
a second maximum value detection step of detecting a maximum value with respect to the 5 consecutive absolute difference signals;

wherein the second threshold value calculation step detects the second threshold value based on the detected minimum and maximum values.

18. The method as claimed in claim 17, wherein the second threshold value calculation step calculates the second threshold value by the following equation,

$$T2 = a' \times MIN' + b' \times MAX'$$

wherein T2 denotes the second threshold value, a' and b' are certain values keeping a' + b' = 1, MIN' denotes the minimum value of 5 consecutive absolute difference signals, and MAX' denotes the maximum value of the 5 consecutive absolute difference signals.

19. The method as claimed in claim 18, wherein the still image judgment step judges whether the image signal is the still image according to the pattern of the odd and even field difference signals stored in the first pattern storage unit (311) and the pattern of the absolute difference signals stored in the second pattern storage unit (361).

20. An apparatus according to any one of claims 3 to 12, wherein the telecine portion indication signal is indicative of a 3:2 pull down image.

21. A method according to any one of claims 1 or 2, or 13 to 19, wherein the telecine portion indication signal is indicative of a 3:2 pull down image.

**Patentansprüche**

1. Verfahren, um einen Fernsehfilmanteil eines Fernsehsignals zu erkennen, welches umfasst:

Erzeugen eines ungeraden Felddifferenzsignals und eines geraden Felddifferenzsignals entsprechend der Größe des Unterschieds zwischen aufeinanderfolgenden geraden Feldern und ungeraden Feldern;
Erzeugen eines absoluten Differenzsignals, welches die Größe der Differenz zwischen dem ungeraden Felddifferenzsignal und dem geraden Felddifferenzsignal anzeigt;
Erzeugen eines Fernsehfilmanteils-Anzeigesignals in Abhängigkeit von dem absoluten Differenzsigrial,
**gekennzeichnet durch**
Beurteilen, ob das Fernsehsignal ein stilles Bild ist, gestützt auf die errechneten geraden und ungeraden Felddifferenzsignale und die absoluten Differenzsignale;
Kombinieren der ungeraden und geraden Felddifferenzsignale, des absoluten Differenzsignals und des Resultats der Beurteilung, ob das Fernsehsignal ein stilles Bild ist, und Detektieren eines Filmmodus des Fernsehsignals als Resultat hieraus.

2. verfahren nach Anspruch 1, umfassend:

   Speichern des absoluten Differenzsignals;
   Errechnen eines Schwellenwerts in Übereinstimmung mit dem gespeicherten absoluten Differenzsignal; und
   Erzeugen des Fernsehfilmanteils-Anzeigesignals in Abhängigkeit von dem Schwellenwert.

3. Vorrichtung zum Erkennen des Fernsehfilmanteils eines Fernsehsignals, umfassend:

   Mittel (300) zum Erzeugen eines ungeraden Felddifferenzsignals und eines geraden Felddifferenzsignals, welche der Größe der Differenz zwischen aufeinanderfolgenden geraden Feldern und ungeraden Feldern entsprechen;
   Mittel (350) zum Erzeugen eines absoluten Felddifferenzsignals, welches die Größe der Differenz zwischen dem ungeraden Felddifferenzsignal und dem geraden Felddifferenzsignal anzeigt;
   Mittel (390) zum Erzeugen eines Fernsehfilmanteils-Anzeigesignals in Abhängigkeit von dem absoluten Differenzsignal,
   **gekennzeichnet durch**
   eine Stillbildbeurteilungseinheit (380) zur Beurteilung, ob ein Fernsehsignal ein stilles Bild ist, basierend auf den berechneten ungeraden und geraden Felddifferenzsignalen und dem absoluten Differenzsignal, wobei das Mittel (390) zum Erzeugen eines Fernsehfilmanteils-Anzeigesignals betrieben werden kann, um die Resultate des Mittels (300) zum Erzeugen ungerader und gerader Felddifferenzsignale, des Mittels (350) zum Erzeugen des absoluten Differenzsignals und ein Resultat der Beurteilung, ob das Fernsehsignal ein stilles Bild ist, unter Verwendung der Stillbildbeurteilungseinheit (380), zu kombinieren.

4. Vorrichtung nach Anspruch 3, umfassend;

   Mittel (355) zum Speichern des absoluten Differenzsignals;,
   Mittel (357) zum Berechnen des Schwellenwertes entsprechend dem gespeicherten absoluten Differenzsignal; und
   Mittel (390) zum Erzeugen des Fernsehfilmanteils-Anzeigesignals in Abhängigkeit von dem Schwellenwert.

5. Eine Fernsehvorrichtung, umfassend:

   Mittel zum Anzeigen eines Bildes; und
   eine Vorrichtung nach Anspruch 3 oder 4.

6. Vorrichtung nach Anspruch 3, wobei ein Mittel zum Erzeugen der geraden und ungeraden Felddifferenzsignale umfasst:

   eine SAD-Berechnungseinheit (303) zum Berechnen der ungeraden und der geraden Felddifferenzsignale zwischen den um eine Periode versetzten Feldern des Fernsehsignals;
   eine SAD-Speichereinheit (305), um die berechneten ungeraden und geraden Felddifferenzsignale sequentiell zu speichern;
   eine erste Schwellenwertberechnungseinheit (307) zur Berechnung eines ersten Schwellenwertes unter Verwendung der gespeicherten ungeraden und geraden Felddifferenzsignale;
   eine erste Mustererzeugungseinheit (309) zum Erzeugen von Mustern der ungeraden und geraden Felddifferenzsignale gemäß dem berechneten ersten Schwellenwert;
   eine erste Musterspeichereinheit (311) zum sequentiellen Speichern der Muster der ungeraden und geraden Differenzsignale, die von der ersten Mustererzeugungseinheit (309) erzeugt werden; und
eine erste Mustervergleichseinheit (313) zum Vergleichen der Muster der in der ersten Musterspeichereinheit (311) gespeicherten ungeraden und geraden Differenzsignale die mit einem vorbestimmten Grundmuster der ungeraden und geraden Differenzsignale;

wobei die Mittel (300) zum Erzeugen der ungeraden und geraden Felddifferenzsignale das Fernsehfilmanteils-Anzeigesignals gemäß einem Vergleichsresultat der ersten Mustervergleichseinheit (313) erzeugen.

7.  Vorrichtung nach Anspruch 6, wobei die erste Schwellenwertberechnungseinheit (307) umfasst:

eine erste Minimalwertdetektionseinheit (307a) zum Detektieren eines Minimalwerts mit Bezug auf fünf aufeinanderfolgende ungerade und gerade Felddifferenzsignale von den ungeraden und geraden Felddifferenzsignalen, die in der SAD-Speichereinheit (305) gespeichert sind; und
eine erste Maximalwert Detektionseinheit (307b), um einen Maximalwert mit Bezug auf fünf aufeinanderfolgende ungerade und gerade Felddifferenzsignale zu detektieren;

wobei die erste Schwellenwert Berechnungseinheit (307) den ersten Schwellenwert basierend auf den detektierten Minimal- und Maximalwerten berechnet.

8.  Vorrichtung nach Anspruch 7, wobei die erste Schwellenwertberechnungseinheit (307) den ersten Schwellenwert mit der folgenden Gleichung berechnet:

$$T1 = a \times MIN + b \times MAX,$$

wobei T1 den ersten Schwellenwert darstellt, a und b bestimmte Werte sind, mit denen a + b = 1 beibehalten wird, MIN den Minimalwert von 5 aufeinanderfolgenden ungeraden und geraden Felddifferenzsignalen anzeigt, und MAX den Maximalwert von 5 aufeinanderfolgenden ungeraden und geraden Felddifferenzsignalen anzeigt.

9.  Vorrichtung gemäß Anspruch 8, wobei das Mittel (350) zum Erzeugen eines absoluten Differenzsignals umfasst:

eine absolute Differenzberechnungseinheit (353) zum Berechnen der absoluten Differenzsignale zwischen den berechneten ungeraden und geraden Felddifferenzsignalen;
eine absolute Differenzspeichereinheit (355), um die absoluten Differenzsignale sequentiell zu speichern;
eine zweite Schwellenwertberechnungseinheit (357) zur Berechnung eines zweiten Schwellenwertes unter Verwendung des gespeicherten absoluten Differenzsignals;
eine zweite Mustererzeugungseinheit (359) zum Erzeugen von Mustern der absoluten Differenzen gemäß dem berechneten zweiten Schwellenwert;
eine zweite Musterspeichereinheit (361), um die Muster des von der zweiten Mustererzeugungseinheit (359) erzeugten absoluten Differenzsignals sequentiell zu speichern; und
eine zweite Mustervergleichseinheit (363), um das Muster der absoluten Differenzsignale, die in der zweiten Musterspeichereinheit (361) gespeichert sind, mit einem vorbestimmten Grundmuster der absoluten Differenzen zu vergleichen;

wobei das Mittel zum Erzeugen eines absoluten Differenzsignals (350) den Fernsehfilmanteil gemäß dem Vergleichsergebnis der zweiten Mustervergleichseinheit (363) detektiert.

10. Vorrichtung nach Anspruch 9, wobei die zweite Schwellenwertberechnungseinheit (357) umfasst :

eine zweite Minimalwertdetektionseinheit (357a) zum Detektieren eines Minimalwerts in Bezug auf fünf aufeinanderfolgende absolute Differenzsignale unter den absoluten Differenzsignalen, die in der absoluten Differenzspeichereinheit (355) gespeichert sind; und
eine zweite Maximalwertdetektionseinheit (357b), um einen Maximalwert mit Bezug auf fünf aufeinanderfolgende absolute Differenzsignale zu detektieren;

wobei die zweite Schwellenwertberechnungseinheit (357) den zweiten Schwellenwert auf Basis der detektierten Minimal- und Maximalwerte berechnet.

**11.** Vorrichtung nach Anspruch 10, wobei die zweite Schwellenwertberechnungseinheit (357) den zweiten Schwellenwert mit der folgenden Gleichung berechnet:

$$T2 = a' \times MIN' + b' \times MAX',$$

wobei T2 den zweiten Schwellenwert kennzeichnet, a' und b' bestimmte Werte sind, die a' + b' = 1 beibehalten, MIN' den Minimalwert von 5 aufeinanderfolgenden absoluten Differenzsignalen anzeigt, MAX' den Maximalwert von 5 aufeinanderfolgenden absoluten Differenzsignalen anzeigt.

**12.** Vorrichtung nach Anspruch 10, wobei die Stillbildbeurteilungseinheit (388) beurteilt, ob das Fernsehsignal ein stilles Bild ist, gemäß der Muster der ungeraden und geraden Felddifferenzsignale, die in der ersten Musterspeichereinheit (311) gespeichert sind, und der Muster der absoluten Differenzsignale, die in der zweiten Musterspeichereinheit (361) gespeichert sind.

**13.** Verfahren nach Anspruch 1, wobei der Schritt des Erzeugens ungerader und gerader Felddifferenzsignale umfasst:

sequentielles Speichern der berechneten ungeraden und geraden Felddifferenzsignale in einer SAD-Speichereinheit (305);
Berechnen eines ersten Schwellenwerts unter Verwendung der sequentiell gespeicherten ungeraden und geraden Felddifferenzsignale;
Erzeugen von Mustern der ungeraden und geraden Felddifferenzsignale gemäß dem berechneten ersten Schwellenwert;
sequentielles Speichern der erzeugten Muster der ungeraden und geraden Felddifferenzsignale in einer ersten Musterspeichereinheit (311); und
Vergleichen der gespeicherten Muster der ungeraden und geraden Felddifferenzsignale mit einem vorbestimmten Grundmuster der ungeraden und geraden Felddifferenzsignale;

wobei das Fernsehfilmanteils-Anzeigesignal gemäß einem Vergleichsresultat des ungeraden und geraden Felddifferenzsignalmustervergleichsschritts gebildet wird.

**14.** Verfahren nach Anspruch 13, wobei der erste Schwellenwertvergleichsschritt umfasst:

Detektieren eines ersten Minimalwerts mit Bezug auf 5 aufeinanderfolgende ungerade und gerade Felddifferenzsignale aus den ungeraden und geraden Felddifferenzsignalen, die in der SAD-Speichereinheit (305) gespeichert sind; und
Detektieren eines ersten Maximalwerts der 5 aufeinanderfolgenden ungeraden und geraden Felddifferenzsignale;

wobei der erste Schwellenwertberechnungsschritt den ersten Schwellenwert auf Basis des detektierten ersten Minimalwerts und des ersten Maximalwerts berechnet.

**15.** Verfahren nach Anspruch 14, wobei der erste Schwellenwertberechnungsschritt den ersten Schwellenwert mit der folgenden Gleichung berechnet,

$$T1 = a \times MIN + b \times MAX,$$

wobei T1 den ersten Schwellenwert kennzeichnet, a und b bestimmte Werte sind, die a + b = 1 beibehalten, MIN den Minimalwert von 5 aufeinanderfolgenden ungeraden und geraden Felddifferenzsignalen anzeigt, und MAX den Maximalwert von 5 aufeinanderfolgenden Felddifferenzsignalen anzeigt.

**16.** Verfahren nach Anspruch 15, wobei der Schritt des Erzeugens eines absoluten Differenzsignals umfasst:

sequentielles Speichern des absoluten Differenzsignals in einer absoluten Differenzsignal-Speichereinheit (355);

Berechnen eines zweiten Schwellenwerts unter Verwendung des gespeicherten absoluten Differenzsignals;
Erzeugen von Mustern der absoluten Differenzsignale gemäß dem berechneten zweiten Schwellenwert;
Sequentielles Speichern der Muster der absoluten Differenzsignale, welche von einer zweiten Mustererzeugungseinheit (359) erzeugt werden; und
Vergleichen der Muster des absoluten Differenzsignals, das in einer Musterspeichereinheit (361) mit einem vorbestimmten Grundmuster der absoluten Differenzen gespeichert ist;

wobei das Fernsehfilmanteils-Anzeigesignal gemäß einem Vergleichsergebnis im absoluten Differenzsignalvergleichsschritt erzeugt wird.

**17.** Verfahren nach Anspruch 16, wobei der zweite Schwellenwertberechnungsschritt umfasst:

einen zweiten Minimalwertdetektionsschritt zum Detektieren eines Minimalwerts mit Bezug auf 5 aufeinanderfolgende absolute Differenzsignale unter den Differenzsignalen, die in einer absoluten Differenzsignalspeichereinheit (355) gespeichert sind; und
einen zweiten Maximalwertdetektionsschritt zum Detektieren eines Maximalwerts in Bezug auf 5 aufeinanderfolgende absolute Differenzsignale;

wobei der zweite Schwellenwertberechnungsschritt den zweiten Schwellenwert auf der Basis der detektierten Minimal- und Maximalwerte detektiert.

**18.** Verfahren nach Anspruch 17, wobei der zweite, Schwellenwertberechnungsschritt den zweiten Schwellenwert nach folgender Gleichung berechnet:

$$T2 = a' \times MIN' + b' \, MAX',$$

wobei T2 den zweiten Schwellenwert anzeigt, a' und b' bestimmte Werte sind, die a' + b' = 1 beibehalten, MIN' den Minimalwert von 5 aufeinanderfolgenden absoluten Differenzsignalen anzeigt, und MAX' den Maximalwert der 5 aufeinanderfolgenden absoluten Differenzsignale anzeigt.

**19.** Verfahren nach Anspruch 18, wobei der Stillbildbeurteilungsschritt beurteilt, ob das Bildsignal das stille Bild ist, gemäß dem Muster der ungeraden und geraden Felddifferenzsignale, die in der ersten Musterspeichereinheit (311) gespeichert sind, und dem Muster der absoluten Differenzsignale, die in der zweiten Musterspeichereinheit (361) gespeichert sind.

**20.** Verfahren nach einem der Ansprüche 3 bis 12, wobei das Fernsehfilmanteils-Anzeigesignal ein 3:2 Pull Down Bild anzeigt.

**21.** Verfahren nach einem der Ansprüche 1 oder 2, oder 13 bis 19, wobei das Fernsehfilmanteils-Anzeigesignal ein 3:2 Pull Down Bild anzeigt.

## Revendications

**1.** Procédé servant à détecter une partie de télécinéma d'un signal de télévision comprenant :

la génération d'un signal de différence de champ impair et un signal de différence de champ pair correspondant à l'amplitude de la différence entre des champs impairs et des champs pairs consécutifs ;
la génération d'un signal de différence absolue indicatif de l'amplitude de la différence entre le signal de différence de champ impair et le signal de différence de champ pair ;
la génération d'un signal d'indication de partie de télécinéma en fonction du signal de différence absolue,

**caractérisé par**
l'estimation du fait de savoir si le signal de télévision est une image fixe en se fondant sur les signaux de différences de champ impair et de champ pair calculés et le signal de différence absolue ;
la combinaison des signaux de différence de champs pairs et impairs, de signal de différence absolue et du résultat de l'estimation de savoir si le signal de télévision est une image fixe, et la détection d'un mode film du signal de télévision, en résultat de ceux-ci.

2. Procédé selon la revendication 1, comprenant :

le stockage de signal de différence absolue ;
le calcul d'une valeur de seuil selon le signal de différence absolue stocké ; et
la génération d'un signal d'indication de partie de télécinéma en fonction de la valeur du seuil.

3. Dispositif servant à détecter une partie de télécinéma d'un signal de télévision comprenant :

un moyen (300) servant à générer un signal de différence de champ impair et un signal de différence de champ pair correspondant à l'amplitude de la différence entre des champs impairs et des champs pairs consécutifs ;
un moyen (350) servant à générer un signal de différence absolue indicatif de l'amplitude de différence entre le signal de différence de champ impair et le signal de différence de champ pair ;
un moyen (390) servant à générer un signal indicatif de partie de télécinéma en fonction du signal de différence absolue, **caractérisé par** :

une unité d'estimation d'image fixe (380) servant à estimer si le signal de télévision est une image fixe en se fondant sur les signaux de différence de champs impairs et pairs calculés et le signal de différence absolue ; dans lequel
le moyen (390) servant à générer un signal indicatif de partie de télécinéma peut fonctionner pour combiner les résultats obtenus du moyen (300) servant à générer des signaux de différence de champs impairs et pairs, du moyen (350) servant à générer le signal de différence absolue et un résultat de l'estimation du fait que le signal de télévision est une image fixe en utilisant l'unité d'estimation d'image fixe (380).

4. Dispositif selon la revendication 3, comprenant :

un moyen (355) servant à stocker le signal de différence absolue ;
un moyen (357) servant à calculer une valeur de seuil selon le signal de différence absolue stocké et
un moyen (390) servant à générer le signal indicatif de partie de télécinéma en fonction de la valeur de seuil.

5. Dispositif de télévision comprenant
un moyen d'affichage d'image ; et
un dispositif selon l'une ou l'autre des revendications 3 ou 4.

6. Dispositif selon la revendication 3, dans lequel le moyen (300) servant à générer les signaux de différence de champs impairs et pairs comprend :

une unité de calcul de DAA (303) servant à calculer les signaux de différence de champs impairs et pairs entre les champs espacés de 1 période du signal de télévision ;
une unité de stockage de DAA (305) servant à stocker séquentiellement les signaux de différence de champs impairs et pairs ;
une première unité de calcul de valeur de seuil (307) servant à calculer une première valeur de seuil en utilisant les signaux de différence de champs impairs et pairs stockés ;
une première unité de génération de tracé (309) servant à générer des tracés des signaux de différence de champs impairs et pairs selon la première valeur de seuil calculée ;
une première unité de stockage de tracé (311) servant à stocker séquentiellement les tracés des signaux de différence impairs et pairs générés par la première unité de génération de tracé (309) ; et
une première unité de comparaison de tracé (313) servant à comparer les tracés des signaux de différence impairs et pairs stockés dans la première unité de stockage de tracé (311) avec un tracé de base prédéterminé des signaux de différence impairs et pairs ;

dans lequel le moyen (300) servant à générer les signaux de différence de champs impairs et pairs génère le signal indicatif de partie de télécinéma selon un résultat de comparaison par la première unité de comparaison de tracé (313).

7. Dispositif selon la revendication 6, dans lequel la première unité de calcul de valeur de seuil (307) comprend :

une première unité de détection de valeur minimum (307a) servant à détecter une valeur minimum par rapport à cinq signaux de différence de champs impairs et pairs consécutifs des signaux de différence de champs impairs et pairs stockés dans l'unité de stockage de DAA (305) ; et

une première unité de détection de valeur maximum (307b) servant à détecter une valeur maximum par rapport aux cinq signaux de différence de champs impairs et pairs consécutifs ;

dans lequel la première unité de calcul de valeur de seuil (307) calcule la première valeur de seuil en se fondant sur les valeurs minimum et maximum détectées.

8.  Dispositif selon la revendication 7, dans lequel la première unité de calcul de valeur de seuil (307) calcule la première valeur de seuil grâce à l'équation suivante.

$$T1 = a \times MIN + b \times MAX$$

dans laquelle T1 indique la première valeur de seuil, a et b sont certaines valeurs vérifiant a + b = 1, MIN indique la valeur minimum de 5 signaux de différence de champs impairs et pairs consécutifs, et MAX indique la valeur maximum de 5 signaux de différence de champs impairs et pairs consécutifs.

9.  Dispositif selon la revendication 8, dans lequel le moyen (350) servant à générer un signal de différence absolue comprend :

une unité de calcul de différence absolue (353) servant à calculer les signaux de différence absolue entre les signaux de différence de champs impairs et pairs calculés ;

une unité de stockage de différence absolue (355) servant à stocker séquentiellement les signaux de différence absolue ;

une seconde unité de calcul de valeur de seuil (357) servant à calculer une seconde valeur de seuils en utilisant les signaux de différence absolue stockés ;

une seconde unité de génération de tracé (359) servant à générer des tracés des différences absolues selon la seconde valeur de seuil calculée ;

une seconde unité de stockage de tracé (361) servant à stocker séquentiellement les tracés des signaux de différence absolue générés par la seconde unité de génération de tracé (359) ; et

une seconde unité de comparaison de tracé (363) servant à comparer le tracé des signaux de différence absolue stocké dans la seconde unité de stockage de tracé (361) avec un tracé de base prédéterminé dés différences absolues ;

dans lequel le moyen servant à générer un signal de différence absolue (350) détecte la partie de télécinéma selon un résultat de comparaison par la seconde unité de comparaison de tracé (363).

10. Dispositif selon la revendication 9, dans lequel la seconde unité de calcul de valeur de seuil (357) comprend :

une seconde unité de détection de valeur minimum (357a) servant à détecter une valeur minimum par rapport à cinq signaux de différence absolue consécutifs parmi les signaux de différence absolue stockés dans l'unité de stockage de la différence absolue (355) ; et

une seconde unité de détection de valeur maximum (357b) servant à détecter une valeur maximum par rapport aux cinq signaux de différence absolue consécutifs ;

dans lequel la seconde unité de calcul de valeur de seuil (357) calcule la seconde valeur de seuil en se fondant sur les valeurs minimum et maximum détectées.

11. Dispositif selon la revendication 10, dans lequel la seconde unité de calcul de valeur de seuil (357) calcule la seconde valeur de seuil en utilisant l'équation suivante.

$$T2 = a' \times MIN' + b' \times MAX'$$

dans laquelle T2 indique la seconde valeur de seuil, a' et b' sont certaines valeurs vérifiant a' + b' =1, MIN' indique la valeur minimum de 5 signaux de différence absolue consécutifs et MAX' indique la valeur maximum de 5 signaux de différence absolue consécutifs.

**12.** Dispositif selon la revendication 10, dans lequel l'unité d'estimation d'image fixe (388) estime si le signal de télévision est une image fixe selon les tracés des signaux de différence de champs impairs et pairs dans la première unité de stockage de tracé (311) et les tracés des signaux de différence absolue stockés dans la seconde unité de stockage de tracé (361).

**13.** Procédé selon la revendication 1, dans lequel l'étape de génération de signaux de différence de champs impairs et pairs comprend :

le stockage séquentiel des signaux de différence de champs impairs et pairs calculés dans une unité de stockage de DAA (305) ;
le calcul d'une première valeur de seuil en utilisant les signaux de différence de champs impairs et pairs stockés séquentiellement ;
la génération de tracés des signaux de différence de champs impairs et pairs selon la première valeur de seuil calculée ;
le stockage séquentiel des tracés générés des signaux de différence de champs impairs et pairs dans la première unité de stockage de tracé (311) ; et
la comparaison des tracés stockés des signaux de différence de champs impairs et pairs avec un tracé de base prédéterminé des signaux de différence de champs impairs et pairs ;

dans lequel le signal indicatif de partie de télécinéma est généré selon un résultat de comparaison par l'étape de comparaison de tracé de signaux de différence de champs impairs et pairs.

**14.** Procédé selon la revendication 13, dans lequel l'étape de calcul de la première valeur de seuil comprend :

la détection d'une première valeur minimum par rapport à 5 signaux de différence de champs impairs et pairs consécutifs des signaux de différence de champs impairs et pairs stockés dans l'unité de stockage de DAA (305) ; et
la détection d'une première valeur maximum des 5 signaux de différence de champs impairs et pairs consécutifs ;

dans laquelle l'étape de calcul de la première valeur de seuil calcule la première valeur de seuil en se fondant sur la première valeur minimum détectée et la première valeur maximum détectée.

**15.** Procédé selon la revendication 14, dans lequel l'étape de calcul de la première valeur de seuil calcule la première valeur de seuil grâce à l'équation suivante,

$$T1 = a \times MIN + b \times MAX$$

dans laquelle T1 indique la première valeur de seuil, a et b sont certaines valeurs vérifiant a + b = 1, MIN indique la valeur minimum de 5 signaux de différence de champs impairs et pairs consécutifs, et MAX indique la valeur maximum des signaux de différence de 5 champs impairs et pairs consécutifs.

**16.** Procédé selon la revendication 15, dans lequel l'étape de génération d'un signal de différence absolue comprend :

le stockage séquentiel de signal de différence absolue dans une unité de stockage de différence absolue (355) ;
le calcul d'une seconde valeur de seuil en utilisant les signaux de différence absolue stockés ;
la génération de tracés des signaux de différence absolue selon la seconde valeur de seuil calculée ;
le stockage séquentiel des tracés des signaux de différence absolue générés par une seconde unité de génération de tracé (359) ; et
la comparaison des tracés des signaux de différence absolue stockés dans une seconde unité de stockage de tracé (361) avec un tracé de base prédéterminé des différences absolues ;

dans lequel le signal indicatif de la partie de télécinéma est généré selon un résultat de comparaison au cours de l'étape de comparaison de signal de différence absolue.

**17.** Procédé selon la revendication 16, dans lequel l'étape de calcul de la seconde valeur de seuil comprend :

une seconde étape de détection de la valeur minimum servant à détecter une valeur minimum par rapport à 5 signaux de différence absolue consécutifs parmi les signaux de différence absolue stockés dans L'unité de stockage de différence absolue (355) ; et
une seconde étape de détection de la valeur maximum servant à détecter une valeur maximum par rapport aux 5 signaux de différence absolue consécutifs ;

dans lequel la seconde étape de calcul de la valeur de seuil détecte la seconde valeur de seuil en se fondant sur les valeurs minimum et maximum détectées.

**18.** Procédé selon la revendication 17, dans lequel l'étape de calcul de la seconde valeur de seuil calcule la seconde valeur de seuil grâce à l'équation suivante,

$$T2 = a' \times MIN' + b' \times MAX'$$

dans laquelle T2 indique la seconde valeur de seuil, a' et b' sont certaines valeurs vérifiant a' + b' = 1, MIN' indique la valeur minimum de 5 signaux de différence absolue consécutifs, et MAX' indique la valeur maximum de 5 signaux de différence absolue consécutifs.

**19.** Procédé selon la revendication 18, dans lequel l'étape d'estimation d'image fixe estime si le signal d'image est l'image fixe selon le tracé des signaux de différence de champs impairs et pairs stockés dans la première unité de stockage de tracé (311) et le tracé des signaux de différence absolue stocké dans la seconde unité de stockage de tracé (361).

**20.** Dispositif selon l'une quelconque des revendications 3 à 12, dans lequel le signal indicatif de partie de télécinéma indique une image d'ajustement 24 images 3/2.

**21.** Procédé selon l'une quelconque des revendications 1 à 2, ou 13 à 19, dans lequel le signal indicatif de partie de télécinéma indique une image d'ajustement 24 images 3/2.

# FIG. 1

# FIG. 2

# FIG. 3

FIELD n

FIELD n-2

**300**

### 3:2 MAIN DETECTION UNIT

303 — SAD CALCULATION UNIT

305 — SAD STORAGE UNIT

307 — FIRST THRESHOLD VALUE CALCULATION UNIT

311 — FIRST PATTERN STORAGE UNIT

309 — FIRST PATTERN GENERATION UNIT

313 — FIRST PATTERN COMPARISON UNIT

MUX (0, 1)

**380** — STILL IMAGE JUDGMENT UNIT

MUX

**350** / **3:2 SUB-DETECTION UNIT**

353 — ABSOLUTE CHANGE AMOUNT CALCULATION UNIT

355 — ABSOLUTE CHANGE AMOUNT STORAGE UNIT

357 — SECOND THRESHOLD VALUE CALCULATION UNIT

361 — SECOND PATTERN STORAGE UNIT

359 — SECOND PATTERN GENERATION UNIT

363 — SECOND PATTERN COMPARISON UNIT

MUX (0, 1)

**390**

sel    Previous flag

MUX

FILM MODE DECISION UNIT

3:2 on/off

EP 1 501 299 B1

# FIG. 4

307

307a    307b

i=i+1    MIN Test    MAX Test

no    i = 5

yes    i=0

MIN (1st,2nd...)    MAX (1st,2nd...)

T1 = a * MIN + b * MAX

T

SAD Buffer FIFO

SAD

# FIG. 5

# FIG. 6

| SAD Pattern : | 0 | 1 | 2 | ··· | n-2 | n-1 | n |
|---|---|---|---|---|---|---|---|

| \|ΔSAD\| Pattern : | | 0 | 1 | 2 | ··· | n-2 | n-1 | |
|---|---|---|---|---|---|---|---|---|

# FIG. 7

```
              ( START )
                  │
                  ▼
S701 ─ CALCULATING SAD BETWEEN FIELD n AND
                   FIELD n-2
                  │
                  ▼
S703 ─ DETECTING FILM MODE BASED ON THE
              CALCULATED SADS
                  │
                  ▼
S705 ─ CALCULATING ABSOLUTE CHANGE AMOUNT
          BETWEEN THE CALCULATED SADS
                  │
                  ▼
S707 ─ DETECTING FILM MODE BASED ON THE
       CALCULATED ABSOLUTE CHANGE AMOUNTS
                  │
                  ▼
S709 ─ JUDGING WHETHER INPUT IMAGE SIGNAL
       IS STILL IMAGE BASED ON THE SAD AND
            ABSOLUTE CHANGE AMOUNT
                  │
                  ▼
S711 ─ DECIDING WHETHER INPUT IMAGE SIGNAL
       IS FILM MODE BY COMBINING RESULTS
       OF DETECTING FILM MODE BASED ON THE
       SAD AND ABSOLUTE CHANGE AMOUNT AND
        RESULT OF JUDGING WHETHER IMAGE
            SIGNAL IS STILL IMAGE
                  │
                  ▼
              ( END )
```

# FIG. 8

START

S801 — SEQUENTIALLY STORING THE CALCULATED SADS IN SAD STORAGE UNIT

S803 — DETECTING MINIMUM VALUE WITH RESPECT TO 5 CONSECUTIVE SADS AMONG THE STORED SADS

S805 — DETECTING MAXIMUM VALUE WITH RESPECT TO 5 CONSECUTIVE SADS AMONG THE STORED SADS

S807 — CALCULATING FIRST THRESHOLD VALUE BASED ON THE DETECTED MINIMUM AND MAXIMUM VALUES

S809 — GENERATING SAD PATTERNS ACCORDING TO THE CALCULATED FIRST THRESHOLD VALUE

S811 — SEQUENTIALLY STORING THE SAD PATTERNS IN FIRST PATTERN STORAGE UNIT

S813 — COMPARING THE STORED SAD PATTERNS WITH A PREDETERMINED BASIC PATTERN OF SAD

S815 — DETECTING FILM MODE ACCORDING TO THE RESULT OF COMPARISON

# FIG. 9

START

S901 — SEQUENTIALLY STORING THE CALCULATED ABSOLUTE CHANGE AMOUNTS IN ABSOLUTE CHANGE AMOUNTS STORAGE UNIT

S903 — DETECTING MINIMUM VALUE WITH RESPECT TO 5 CONSECUTIVE ABSOLUTE CHANGE AMOUNTS OF THE STORED ABSOLUTE CHANGE AMOUNTS

S905 — DETECTING MAXIMUM VALUE WITH RESPECT TO 5 CONSECUTIVE ABSOLUTE CHANGE AMOUNTS OF THE STORED ABSOLUTE CHANGE AMOUNTS

S907 — CALCULATING SECOND THRESHOLD VALUE BASED ON DETECTED MINIMUM AND MAXIMUM VALUES

S909 — GENERATING PATTERNS OF ABSOLUTE CHANGE AMOUNTS ACCORDING TO THE CALCULATED SECOND THRESHOLD VALUE

S911 — SEQUENTIALLY STORING PATTERNS OF THE ABSOLUTE CHANGE AMOUNTS IN SECOND PATTERN STORAGE UNIT

S913 — COMPARING THE PATTERNS OF ABSOLUTE CHANGE AMOUNTS WITH A PREDETERMINED BASIC PATTERN OF ABSOLUTE CHANGE AMOUNT

S915 — DETECTING FILM MODE ACCORDING TO THE RESULT OF COMPARISON

# FIG. 10

Original
Image

$A_n$    $A_{n-1}$    $A_{-2}$    $A_{n-3}$    $A_{n-4}$    $A_{n-(k-1)}$   $A_{n-k}$   $A_{n-(k-1)}$

SAD   :   $X_n$   $X_{n-1}$   $X_{n-2}$   $X_{n-3}$   $X_{n-4}$   $X_{n+k-1}$   $X_{n-k}$

$|\Delta SAD|$ :   $Y_{n+1}$   $Y_n$   $Y_{n-1}$   $Y_{n-2}$   $Y_{n-3}$   $X_{n+k-2}$   $X_{n+k-1}$

# FIG. 11

SAD Pattern :   0   1   1   1   1   0   1   1   1   1

$|\Delta SAD|$ Pattern :   1   0   0   0   1   1   0   0   0

EP 1 501 299 B1